Europäisches Patentamt

European Patent Office

Office européen des brevets

(11) Veröffentlichungsnummer: **0 230 607**

**A2**

(12)      **EUROPÄISCHE PATENTANMELDUNG**

(21) Anmeldenummer: **86117535.4**

(22) Anmeldetag: **17.12.86**

(51) Int. Cl.⁴: **H04M 1/02**

(30) Priorität: **25.01.86 DE 3602271**
        **08.03.86 DE 3607728**

(43) Veröffentlichungstag der Anmeldung:
**05.08.87 Patentblatt 87/32**

(84) Benannte Vertragsstaaten:
**AT BE CH FR GB IT LI LU NL SE**

(71) Anmelder: **TELENORMA Telefonbau und**
**Normalzeit GmbH**
**Mainzer Landstrasse 128-146**
**D-6000 Frankfurt (Main)(DE)**

(72) Erfinder: **Krämer, Dieter, Dipl.-Ing.**
**Im Hain 5**
**D-6270 Idstein(DE)**
Erfinder: **Sussner, Gerhard**
**Waldstrasse 45**
**D-6462 Meerholz(DE)**
Erfinder: **Girscher, Wolfgang, Dipl.-Ing.**
**Woogstrasse 27**
**D-6000 Frankfurt 50(DE)**
Erfinder: **Niederhöfer, Karl-Heinz, Dipl.-Ing.**
**Dalbergstrasse 40**
**D-6230 Frankfurt(DE)**
Erfinder: **Beck, Werner, Dipl.-Ing.**
**Dieburger Strasse 75**
**D-6100 Darmstadt(DE)**
Erfinder: **Ogorczyk, Bernd, Dipl.-Ing.**
**Ulmenweg 15**
**D-6367 Karben 1(DE)**

(54) **Endgerät einer Fernmeldevermittlungsanlage.**

(57) Ein Endgerät einer Fernmeldevermittlungsanlage mit einer Wähl-und einer Bedienungs-und/oder Eingabetastatur und einer oder mehreren Anzeigevorrichtung und einer auf der Oberseite des Endgeräts angebrachten Auflage für den Handapparat weist einen Schlitten auf, welcher durch die die Tastaturen tragende Oberseite evtl. zusammen mit einer Anzeigevorrichtung gebildet wird. Der Schlitten gibt in der einen Lage eine darunterliegende weitere Tastatur oder Anzeigevorrichtung frei. Diese zusätzliche Tastatur kann als Zielwahltastatur, alpha-numerische Eingabetastatur, usw. ausgebildet sein, außerdem kann anstelle dieser Tastatur auch ein Besetztlampenfeld eingesetzt werden.

Fig. 1

## Endgerät einer Fernsprechvermittlungsanlage

Die Erfindung betrifft ein Endgerät einer Fernmeldevermittlungsanlage mit einer Wähl-und einer Bedienungs-und/oder Eingabetastatur und einer oder mehreren Anzeigevorrichtungen und einer auf der Oberseite des Endgeräts angebrachten Auflage für den Handapparat.

Ein derartiges Endgerät ist bereits bekannt. So wird in der DE-OS 34 06 881 eine Anordnung zur Eingabe von Buchstaben, Ziffern und Sonderkennzeichen für eine im Fernsprechapparat befindliche Anzeigeeinrichtung beschrieben, bei welchem an dessen Oberseite die Tasten einer Wähltastatur und weitere Funktionstasten angebracht sind. Weiterhin trägt die Oberseite eine Anzeigevorrichtung zur Anzeige einer Rufnummer, Gebühreninformationen, usw.

Wird nun ein derartiger Fernsprechapparat mit weiteren Funktionen ausgestattet, so sind hierzu u.U. weitere Anzeigevorrichtungen und Tasten, beispielsweise eine Eingabetastatur notwendig. Eine zusätzliche Anzeigevorrichtung oder weitere Tasten bedingen entweder eine größere Oberseite für deren Unterbringung oder die Tasten müssen als Miniaturtasten ausgebildet werden, wie dies in der bereits genannten DE-OS 34 06 881 beschrieben ist.

Die Aufgabe der Erfindung besteht nun darin, ein Endgerät für eine Fernmeldevermittlungsanlage anzugeben, bei welchem eine weitere Anzeigevorrichtung oder weitere Tasten vorgesehen werden können, ohne daß letztere als Miniaturtasten ausgebildet sein müssen und keine Vergrößerung der Oberseite zur Unterbringung derselben notwendig ist.

Diese Aufgabe wird dadurch gelöst, daß die die Tastaturen tragende Oberseite oder ein Teil derselben evtl. zusammen mit einer Anzeigevorrichtung als verschiebbarer Schlitten ausgebildet ist, welche in der einen Lage darunterliegende weitere Tastatur und/oder Anzeigevorrichtung freigibt.

Durch die Verschiebung des Schlittens erfolgt die Freigabe weiterer Tasten oder einer weiteren Anzeigevorrichtung, für die kein zusätzlicher Platz auf der Oberseite des Endgeräts benötigt wird. Es ist besonders vorteilhaft, wenn die durch die Verschiebung des Schlittens freigegebenen Tasten bzw. die Anzeigevorrichtung nicht ständig benötigt wird. So läßt sich unterhalb des Schlittens die Tastatur einer Zielwahleinrichtung oder auch eine alpha-numerische Eingabetastatur oder auch ein Besetztlampenfeld unterbringen.

Es ist bereits ein schnurloses Fernsprechgerät aus der DE-OS 33 23 858 bereits bekannt, bei welchem das die Hör-und Sprechkapsel tragende Gehäuse aus gegeneinander verschiebbaren Gehäuseteilen besteht. Im zusammengeschobenen Zustand ist das Fernsprechgerät nicht betriebsfähig, da Sprechkapsel und Hörkapsel nicht den notwendigen Abstand voneinander aufweisen. Zu diesem Zweck werden die beiden Gehäuseteile auseinandergezogen, wobei die im zusammengeschobenen Zustand verdeckte Wähltastatur freigegeben wird.

Eine Weiterbildung der Erfindung besteht darin, daß in der freigebenden Lage des Schlittens ein Kontakt oder eine Lichtschranke betätigt wird, durch welche eine Umschaltung der Tastenfunktionen und/oder der Anzeigevorrichtungen erfolgt.

Hierdurch ist beispielsweise eine Verlagerung von Tastenfunktionen der auf der Oberseite angebrachten Tasten auf die darunterliegenden Tasten möglich, wobei den frei gewordenen Tasten neue Funktionen zugewiesen werden können, welche auf der an der Oberseite angebrachten Anzeigevorrichtung angezeigt werden können.

Weitere Vorteile ergeben sich aus den Unteransprüchen.

Die Erfindung wird anhand eines Ausführungsbeispiels näher erläutert, welches in der Zeichnung dargestellt ist. Es zeigt:

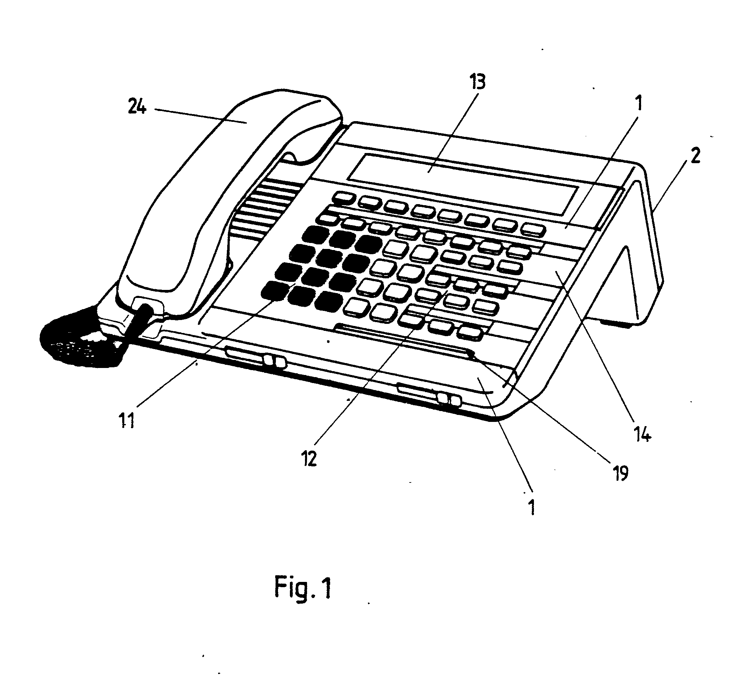

Fig. 1 die perspektivische Ansicht eine Endgeräts mit dem Schlitten in der Ruhelage,

Fig. 2 eine perspektivische Ansicht des Endgeräts mit dem Schlitten in der freigebenden Lage,

Fig. 3 einen Schnitt durch das Endgerät mit dem Schlitten in der Ruhelage,

Fig. 4 einen Schnitt durch das Endgerät mit dem Schlitten in der freigebenden Lage und

Fig. 5 eine perspektivische Ansicht des Endgeräts von hinten mit dem Schlitten in der Ruhelage.

Die dem Benutzer zugewandte Oberseite 1 trägt eine Wähltastatur 11, eine Bedienungstastatur 12 und eine Anzeigevorrichtung 13 und weiterhin die Ablagemulden für den Handapparat 24. Der die Wähltastatur 11, die Bedienungstastatur 12 und die Anzeigevorrichtung 13 tragende Teil der Oberseite 1 ist als Schlitten 14 ausgebildet, welcher in der Quer-oder in der Längsrichtung verschiebbar ist. Für die Verschiebung in der Längsrichtung dient die Griffleiste 19. Der Schlitten kann derart ausgebildet sein, daß dieser einen Teil der Rückseite 2 umfaßt.

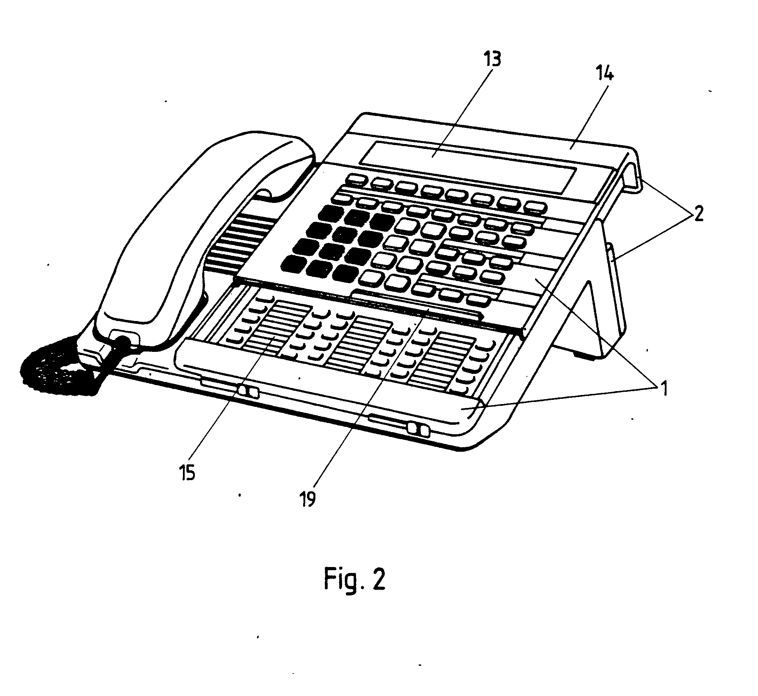

In Fig. 2 wird der Schlitten 14 in der die Tastatur 15 freigebenden Lage gezeigt. Der Schlitten 14 bildet dabei einen Teil der Oberseite 1 und einen Teil der Rückseite 2. Bei der durch den Schlitten freigegebenen Tastatur 15 kann es sich beispielsweise um eine Zielwahltastatur oder auch um eine alpha-numerische Eingabetastatur han-

dein, Weiterhin kann anstelle der Tastatur 15 eine weitere Anzeigevorrichtung, beispielsweise ein Besetztlampenfeld oder auch eine Flüssigkristallanzeige angebracht sein. Das Verschieben des Schlittens 14 erfolgt über die Griffleiste 19. Der Schlitten 14 rastet in beiden Lagen ein und kann einen Kontakt oder eine Lichtschranke betätigen, welche beispielsweise zur Umschaltung von Funktionen der Tasten auf der Oberseite 1 auf Tasten der Tastatur 15 dienen, wobei die auf der Oberseite frei werdenden Tasten mit anderen Funktionen für die Dauer der Verschiebung des Schlittens 14 belegt werden können, wobei deren neue Funktion auf der Anzeigevorrichtung 13 angezeigt werden kann. Ist anstelle der freigegebenen Tastatur 15 eine weitere Anzeigevorrichtung vorgesehen, so kann in gleicher Weise auch eine Umschaltung der Anzeigefunktionen der Anzeigevorrichtung 13 auf die unter dem Schlitten 14 liegende Anzeigevorrichtung in Abhängigkeit von der Lage des Schlittens 14 vorgenommen werden.

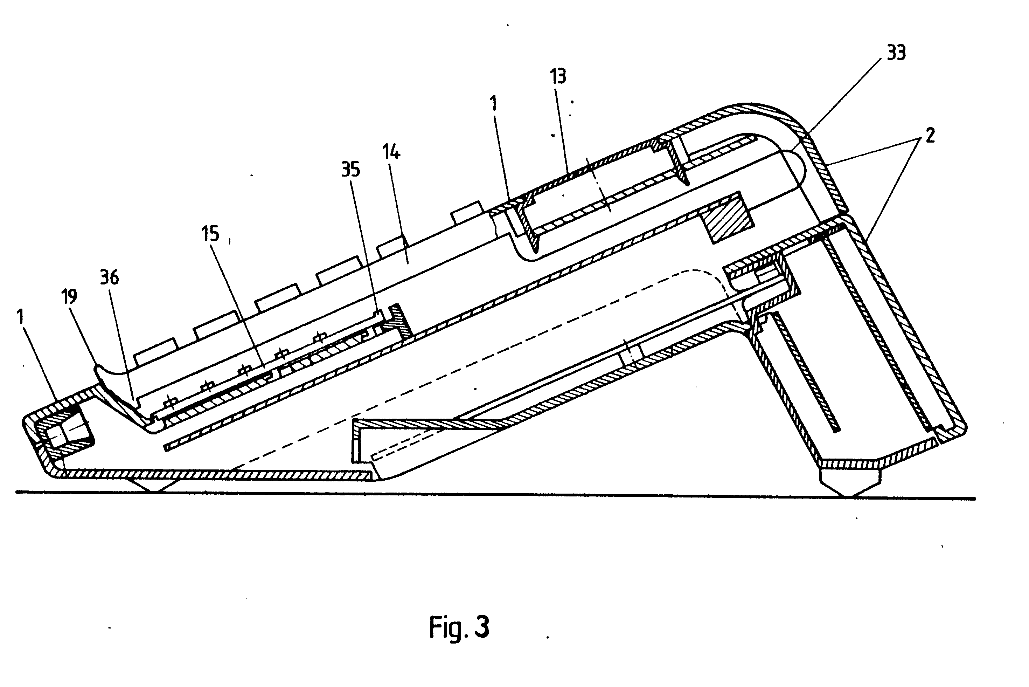

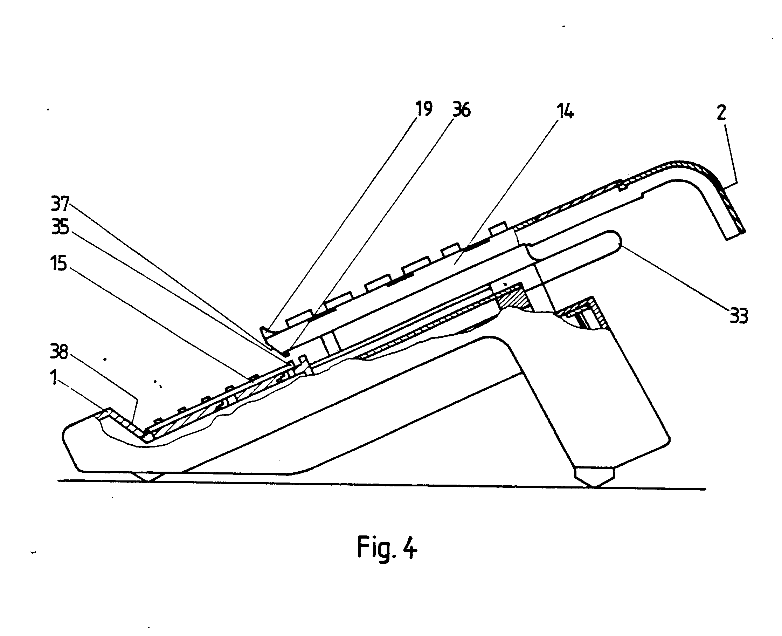

In den Fig. 3 und 4 wird der Schlitten in der einen (Fig. 3) und in der anderen (Fig.4) Lage gezeigt. Unterhalb der Griffleiste 19 des Schlittens 14 ist eine Querleiste 36 angebracht, welche in der freigebenden Lage des Schlittens 14 mit der Querleiste 35 der Tastatur 15 fluchtet. Die Vorderseite des Schlittens 14 zwischen der Griffleiste 19 und der Querleiste 36 weist eine Abschrägung 37 auf, welcher die Gehäuseform des Endgeräts zwischen der Oberseite 1 und der Tastatur 15 entsprechend durch eine Schräge 38 angepaßt ist.

Die elektrische Verbindung der Einrichtungen des Schlittens (Tastatur und Anzeigevorrichtung) mit den übrigen Einrichtungen des Endgeräts erfolgt über die flexible Leiterplatte oder das Bandkabel 33. Ist die Tastatur des Schlittens 14 als Folientastatur ausgebildet, so kann die flexible Leiterplatte 33 einen Teil deren Folie mit den entsprechenden Leiterbahnen bilden. Der Schlitten 14 wird in der freigebenden Lage durch eine nicht gezeigte Rastvorrichtung gehalten.

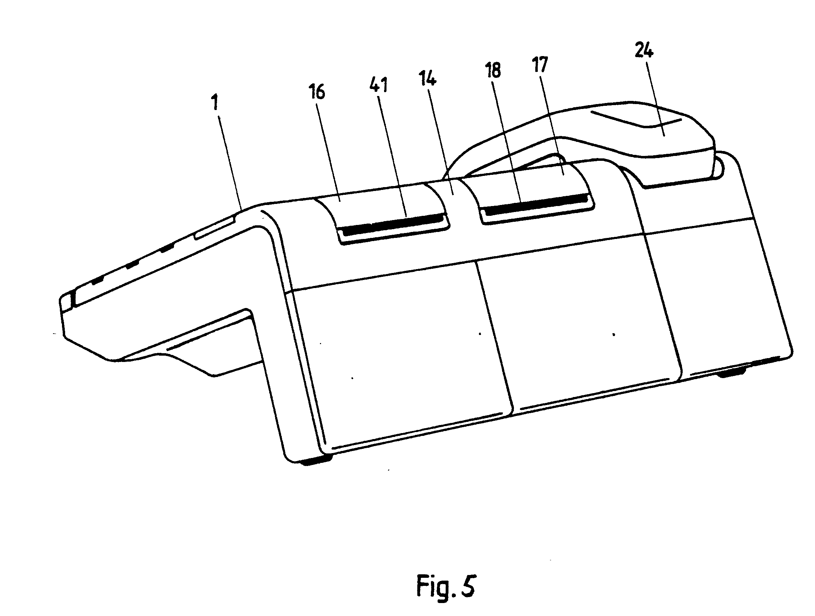

Bei der in Fig. 5 gezeigten Ansicht von hinten wird deutlich, daß der Schlitten 14 einen Teil der Rückseite des Gehäuses umfaßt. In den Schlitten 14 kann ein Ausweisleser 16 und ein Drucker 17 eingebaut sein, deren Eingabeschlitz 41 bzw. Ausgabeschlitz 18 parallel zur Oberseite 1 verlaufen.

Es wird darauf hingewiesen, daß die Erfindung nicht nur auf ein Endgerät anwendbar ist, wie es in der Zeichnung dargestellt ist, vielmehr läßt sich die Erfindung auf sämtliche Endgeräte von Fernmeldevermittlungsanlagen anwenden, die als Komfort-Fernsprechapparate, Multifunktions-Terminals, Vermittlungsapparate, usw. ausgebildet sein können.

**Ansprüche**

1. Endgerät einer Fernmeldevermittlungsanlage mit einer Wähl-und einer Bedienungs-und/oder Eingabetastatur und einer oder mehreren Anzeigevorrichtung und einer auf der Oberseite des Endgeräts angebrachten Auflage für den Handapparat,
dadurch gekennzeichnet,
daß die die Tastaturen (11, 12) tragende Oberseite (1) oder ein Teil derselben evtl. zusammen mit einer Anzeigevorrichtung (13) als verschiebbarer Schlitten (14) ausgebildet ist, welcher in der einen Lage eine darunterliegende, weitere Tastatur (15) und/oder Anzeigevorrichtung frei gibt.

2. Endgerät nach Anspruch 1,
dadurch gekennzeichnet,
daß die darunterliegende Tastatur (15) als Zielwahltastatur oder als alpha-numerische Eingabetastatur oder die darunterliegende Anzeigevorrichtung als Besetztlampenfeld oder als mehrzeilige alpha-numerische Anzeigevorrichtung ausgebildet ist.

3. Endgerät nach einem der Ansprüche 1 oder 2,
dadurch gekennzeichnet,
daß in der freigebenden Lage der Schlitten (14) arretiert wird.

4. Endgerät nach einem der Ansprüche 1 bis 3,
dadurch gekennzeichnet,
daß in der freigebenden Lage des Schlittens (14) ein Kontakt oder eine Lichtschranke betätigt wird, durch welchen eine Umschaltung der Tastenfunktionen und/oder der Anzeigevorrichtung erfolgt.

5. Endgerät nach einem der Ansprüche 1 bis 4,
dadurch gekennzeichnet,
daß die Tastatur (11, 12) und/oder Anzeigevorrichtung (13) des Schlittens (14) über eine flexible, die entsprechenden Leiterbahnen tragende Leiterplatte oder ein Bandkabel (33) mit den übrigen Einrichtungen des Endgeräts verbunden ist.

6. Endgerät nach Anspruch 5,
dadurch gekennzeichnet,
daß die Tastatur des Schlittens (11, 12) als Folientastatur ausgebildet ist und die Folie derselben als flexibler Anschluß (33) für die Einrichtungen des Schlittens (14) an den übrigen Einrichtungen des Edngeräts dient.

7. Endgerät nach einem der Ansprüche 1 bis 6,
dadurch gekennzeichnet,
daß der Schlitten (14) in der Längsrichtung bewegbar ist.

8. Endgerät nach einem der Ansprüche 1 bis 7,
dadurch gekennzeichnet,
daß der obere Teil der Rückwand (2) einen Teil des Schlittens (14) bildet.

9. Endgerät nach Anspruch 8,
dadurch gekennzeichnet,
daß in dem Schlitten (14) ein Ausweisleser (16) und/oder ein Drucker (17) angeordnet ist, dessen Einführungs-(41) bzw. Ausgabeschlitz (18) sich im oberen Teil der Rückwand (2) parallel zur Oberseite (1) befindet.

10. Engerät nach einem der Ansprüche 1 bis 9, dadurch gekennzeichnet, daß der Schlitten (14) in der Querrichtung bewegbar ist.

Fig. 1

Fig. 2

Fig. 3

0 230 607

Fig. 4

Fig. 5